# EUROPÄISCHE PATENTANMELDUNG

(11) **EP 2 181 828 A1**
(43) Veröffentlichungstag der Anmeldung: **05.05.2010**
(21) Anmeldenummer: 09013479.2
(22) Anmeldetag: 26.10.2009
(51) Int. Cl.: B29C 45/14, B29C 45/37

(54) **Datenträger sowie Verfahren und Vorrichtung zum Herstellen des Datenträgers**

(30) Priorität: 29.10.2008 DE 102008053663
(71) Anmelder: Giesecke & Devrient GmbH, 81677 München (DE)
(72) Erfinder: Kluge, Stefan, 80997 München (DE); Cinkler, Kalman, Dr., 80797 München (DE)

(57) **Zusammenfassung**

In spritzgegossenen kartenförmigen tragbaren Datenträgern, insbesondere Kreditkarten und anderen Ausweiskarten, werden Nachahmungen von Oberflächentiefprägungen und -hochprägungen beim Spritzgießen erzeugt. Dazu werden in die Spritzgußform austauschbare Spritzgußformelemente derart eingesetzt, daß sie einen Teil der formgebenden Spritzgußformoberfläche mit durch Materialaussparungen und/oder Materialerhebungen in die Oberfläche des Datenträgers einzubringenden Individualisierungsdaten in Form eines Reliefnegativs bilden. Der Einspritzdruck drängt dann das Spritzgießmaterial in das Reliefnegativ oder drängt eine in die Spritzgußform eingelegte Kartendeckfolie in das Reliefnegativ, so daß der fertige Datenträger auf seiner äußeren Oberfläche das entsprechende Reliefpositiv abbildet.

## Beschreibung

Die Erfindung betrifft ein Verfahren und eine Vorrichtung zum Herstellen von spritzgegossenen kartenförmigen tragbaren Datenträgern, insbesondere Kreditkarten und andere Ausweiskarten, mit Individualisierungsdaten, die als Vertiefungen oder Erhebungen in der Oberfläche des Datenträgers realisiert sind. Die Erfindung betrifft gleichermaßen entsprechende Datenträger.

Ausweiskarten werden häufig durch Hochprägen und/ oder Tiefprägen (Indentprint) von alphanumerischen Zeichen personalisiert. Die Tiefprägung erfolgt bei Kreditkarten auf der Kartenrückseite üblicherweise im Bereich des Unterschriftsstreifens, während die Hochprägung bei Kreditkarten in der unteren Kartenhälfte der Kartenvorderseite realisiert wird. Die Lage der Felder für die hochgeprägten Zahlen und Buchstaben sind für Ausweiskarten in ISO 7811, Teil 3 spezifiziert. In beiden Verfahren werden die alphanumerischen Zeichen mittels eines Stempels in die bereits fertige Karte eingeprägt. Beim Indentprint, das heißt der Zifferung auf dem Unterschriftsstreifen, drückt sich der Stempel bis zur Kartenvorderseite durch und würde im Kartenkörper liegende Elektronik, wie Leiterbahnen oder komplexere elektronische Bauteile zerstören, wenn sie dort angeordnet wären. Diese Bereiche sind daher von Elektronikbauelementen frei zu halten. Entsprechendes gilt für die Hochprägung, die sich von der Tiefprägung im wesentlichen dadurch unterscheidet, daß sich die von der Rückseite her eingeprägten Zeichen auf der Kartenvorderseite derart durchdrücken, daß sie dort Erhebungen bilden, die von der Vorderseite aus lesbar sind und insbesondere dazu dienen, als Abdruck auf papierene Datenträger abgebildet zu werden.

Statt des Indentprints könnte eine Personalisierung des Unterschriftsstreifens zum Beispiel auch durch Schwärzen mittels Lasers erfolgen. Aus Sicherheitsgründen bevorzugen die Kreditkarteninstitute jedoch den originalen Indentprint aufgrund seiner eingeprägten Struktur. Auch für die Hochprägung gibt es Alternativen. Beispielsweise kann die Kartenoberfläche aus einem Material bestehen, welches mittels der Energie eines Laserstrahls aufschäumbar ist. Die hochgeprägten Bereiche werden dann durch im Laserbeschriftungsverfahren aufgeschäumte Bereiche gebildet. Die Laserenergie und die dabei auftretenden Temperaturen können jedoch für darunter liegende Elektronikbauelemente schädlich sein.

Aufgabe der vorliegenden Erfindung ist es daher, eine Alternative zur Tief- und/ oder Hochprägung anzugeben, die es insbesondere auch ermöglicht, in den entsprechenden Bereichen Elektronikbauteile im Inneren des kartenförmigen Datenträgers gefahrlos anzuordnen.

Diese Aufgabe wird durch ein Verfahren und eine Vorrichtung zum Herstellen von spritzgegossenen kartenförmigen tragbaren Datenträgern und durch einen entsprechenden spritzgegossenen Datenträger mit den Merkmalen der nebengeordneten Ansprüche gelöst.

Das Herstellen von Ausweiskarten im Spritzgießverfahren ist prinzipiell seit langem bekannt. Insbesondere ist es auch bekannt, zwei Kartendeckschichten in die Spritzgußform einzulegen und den Kartenkörper dazwischen einzuspritzen. In solchen Karten können Hoch- und Tiefprägungen in herkömmlicher Weise nachträglich eingebracht werden. Erfindungsgemäß werden die Individualisierungsdaten nun bereits beim Spritzgießen, also während der Herstellung des kartenförmigen tragbaren Datenträgers, in die Datenträgeroberfläche eingebracht. Dazu werden in die Spritzgußform, welche die Abmessungen des fertigen Datenträgers, insbesondere also die äußeren Abmessungen gemäß ISO 7810 (typischerweise als ID-1 Format) besitzt, ein oder mehrere austauschbare Spritzgußformelemente derart eingesetzt, daß sie einen Teil der formgebenden Spritzgußformoberfläche bilden. Dieser Teil weist ein Reliefnegativ auf, welches in der Oberfläche des spritzgegossenen Datenträgers ein Reliefpositiv in Form von Materialaussparungen und/ oder Materialerhebungen relativ zu den planparallelen Oberflächen des Datenträgers erzeugt. Das Reliefnegativ ist dabei so gestaltet, daß die in den Datenträger einzubringenden Individualisierungsdaten als lesbares Reliefpositiv entstehen.

Durch Austauschen der Spritzgußformelemente kann in kurzer Zeit eine Vielzahl individualisierter Datenträger hergestellt werden. Der Austauschvorgang ist vorteilhaft automatisierbar.

In vorteilhafter Weise gestattet es das erfindungsgemäße Verfahren vergleichsweise große elektronische Bauelemente wie bestückte Leiterbahnen, Inletts, Batterianordnungen, Displays und dergleichen gleichzeitig mit in den Kartenkörper integriert und mit Spritzgußmaterial umspritzt werden, ohne daß die Gefahr besteht, daß sie durch einen nachfolgenden Prägeschritt beschädigt werden. Mittels des erfindungsgemäßen Verfahrens ist es insbesondere möglich, derartige elektronische Bauelemente im Bereich der tiefgelegten und/ oder hochgestellten Individualisierungsdaten im spritzgegossenen Kartenkörper unterzubringen, also unmittelbar unterhalb der Individualisierungsdaten.

Im einfachsten Fall fließt das Spritzgußmaterial unmittelbar in das Reliefnegativ des Spritzgußformelements und bildet so die Individualisierungsdaten unmittelbar als Reliefpositiv in dem fertigen Datenträger ab.

Herkömmliche Ausweiskarten mit Hoch- und/oder Tiefprägungen, insbesondere Chipkarten und andere elektronische Karten, weisen jedoch Deckschichten mit spezifischen Eigenschaften auf, die dem Spritzgußmaterial überlegen sind. In diesem Fall wird nur der Kartenkern als Spritzgußschicht an eine solche Deckschicht oder üblicherweise zwischen zwei Kartendeckschichten an- bzw. eingespritzt. Auch dies ist mit dem erfindungsgemäßen Verfahren möglich. Dabei ist es wesentlich, daß der Spritzgießdruck die entsprechende Deckfolie gegen das austauschbare Spritzgußformelement preßt, so daß sich das Reliefnegativ von der entsprechend anderen Seite in die Deckfolie einprägt. Die spritzgegossene Kernschicht des Datenträgers muss sich dann zumindest auch in den Bereich erstrecken, in dem die zu erzeugenden Materialaussparungen und/ oder Materialerhebungen entstehen sollen, die die Individualisierungsdaten darstellen. Je nach den Materialeigenschaften und der Materialdicke der Kartendeckschichten muss der Spritzgießdruck geeignet eingestellt werden. Auch die Temperaturführung sowie die Verweildauer der Karte in der Spritzgußform bis zum Auswerfen können als Einflussparameter varüert werden. Bei der Temperaturführung ist sowohl die Temperatur des eingespritzten Kunststoffs als auch die Temperatur der Spritzgußformwandung, insbesondere der austauschbaren Spritzgußformelemente, ein Einflussfaktor. Die Spritzgußformelemente sind daher vorteilhafter Weise beheizbar.

Aus der DE 102 48 392 A1 ist es bekannt, eine Basisfolie mittels eines Stempels gegen die Innenfläche einer Spritzgußformhälfte anzudrücken, so daß sich im Bereich des Stempels eine großflächige Aussparung am fertigen Bauteil mit einer dünnen aber stabilen, durch die Basisfolie gebildeten Grundfläche ohne Spritzgußmaterial bildet. Die Innenfläche der Spritzgußformhälfte, gegen die sich der Stempel abdrückt, kann eine Reliefoberfläche besitzen, welche dazu dienen kann, eine Strukturprägung in Form eines Linsenrasters, eines Logos oder einer anderen Prägestruktur in die äußere Oberfläche der Basisfolie einzuprägen. Insbesondere kann der betreffende Bereich der Innenwand der Spritzgußformhälfte seinerseits als eine Art Gegenstempel oder Prägestempel ausgeführt sein, um einen zum Prägen der Basisfolie notwendigen Druck auf die Basisfolie aufzubringen.

Die DE 102 48 392 A1 beschäftigt sich aber nicht mit dem Erzeugen von Individualisierungsdaten auf der Kartenaußenseite im Bereich des Prägestempels und wäre dazu auch nicht geeignet. Denn einerseits würde die Basisfolie in dem Fall, daß die Individualisierungsdaten mittels des Stempels als Vertiefungen in der Basisfolie erzeugt werden, zusätzlich geschwächt und die Tiefe des erzeugten Hohlraums unerwünscht verringert. Andererseits, wenn die Individualisierungsdaten in der Basisfolie mittels des Stempels als erhabene Bereiche ausgebildet würden, bestünde die Gefahr, daß die dünne Basisfolie dem mechanischen Druck beim Herstellen eines Papierabdrucks von den erhabenen Prägestrukturen nicht den notwendigen Gegendruck bieten kann. Demgegenüber sind die erfindungsgemäß erzeugten Individualisierungsdaten hinterspritzt, so daß selbst dann, wenn in diesem Bereich umspritzte elektronische Bauteile vorliegen, ausreichende Stabilität geschaffen ist.

Nachfolgend wird die Erfindung anhand der begleitenden Zeichnungen beispielhaft beschrieben. Darin zeigen:
- Figur 1: schematisch den Spritzgußvorgang anhand zweier Spritzguß- formhälften mit dazwischen eingelegten Deckfolien und elektro- nischen Bauteilen vor dem Einspritzen von Spritzgußmaterial und
- Figur 2: den fertig gespritzten kartenförmigen Datenträger mit In- dentschrift und "Hochprägung".

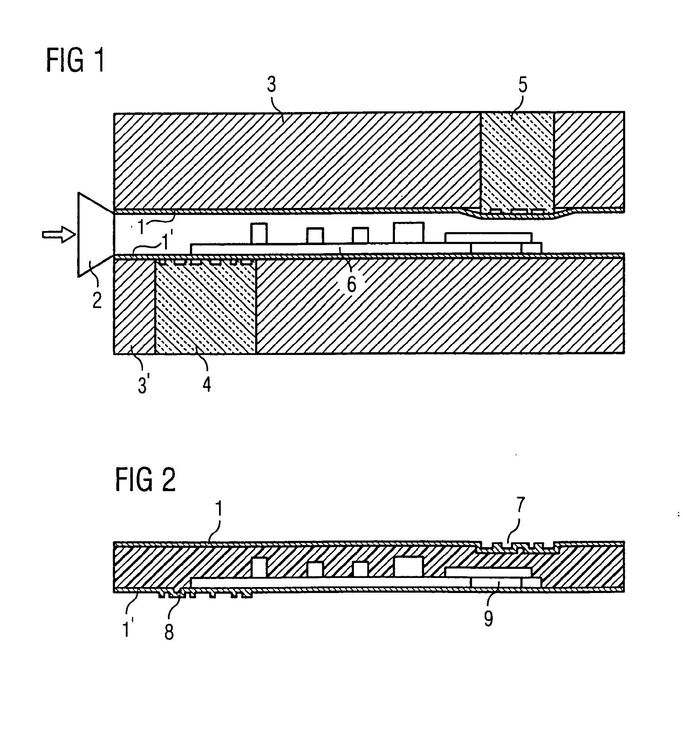

Figur 1 zeigt schematisch eine Spritzgußform mit den Innenabmessungen einer Karte im ID-1 Format gemäß ISO 7810, umfassend zwei Formhälften 3, 3' mit jeweils einem austauschbaren Spritzgußformelement 4 bzw. 5. Die Spritzgußformelemente 4 und 5 bilden einen Teil der formgebenden Spritzgußformoberfläche, und dieser Teil ist reliefartig ausgeführt. Im Falle des Spritzgußformelements 5 ragt dieses Relief in die Kavität der Spritzgußform hinein, welche ansonsten planparallele Flächen aufweist. Das Spritzgußformelement 5 erzeugt somit in dem herzustellenden Datenträger Materialaussparungen, die in der fertigen Karte im Bereich des Unterschriftsstreifens liegen können. Das andere Spritzgußformelement 4 dagegen ragt mit seiner reliefartigen Oberfläche nicht in die Kavität der Spritzgußform hinein, sondern schließt mit der planflächigen Oberfläche der Formhälfte 3' bündig ab. Beim späteren Spritzgießen wird sich daher Material in die Vertiefungen dieses Relief hineindrücken und am fertigen Datenträger entsprechende Materialerhebungen bilden, die beispielsweise in den in ISO 7811, Teil 3 spezifizierten Feldern für hochgeprägte Karten liegen können. Die Reliefs der Spritzgußformelemente 4 und 5 bilden somit jeweils ein Reliefnegativ und erzeugen am fertigen Datenträger ein entsprechendes Reliefpositiv in Gestalt der gewünschten Individualisierungsdaten.

Die Spritzgußformelemente 4, 5 sind leicht gegen andere Spritzgußformelemente mit anderen Reliefnegativen austauschbar, so daß in kurzer Zeit eine Vielzahl von kartenförmigen Datenträgern mit unterschiedlichsten Individualisierungsdaten herstellbar ist. Der Austausch kann insbesondere maschinell erfolgen. Die Spritzgußformelemente 4, 5 können auch einander gegenüberliegend angeordnet sein; weiter ist es ohne weiteres möglich, in den Formhälften 3,3' auch jeweils mehr als genau ein Spritzgußformelement 4, 5 vorzusehen oder nur eine Formhälfte 3,3' zur Aufnahme von einem oder mehreren Spritzgußformelementen 4, 5 einzurichten.

In dem in Figur 1 dargestellten Ausführungsbeispiel sind in die Spritzgußform zwei Deckfolien 1,1' sowie ein oder mehrere dazwischen liegende elektronische Bauelemente 6 eingelegt. Zumindest ein Bauelement 6 besitzt eine in Bezug auf die Gesamtgröße der fertigen Karte merkliche räumliche Ausdehnung, die so groß ist, daß das Bauelement zumindest teilweise unter- bzw. oberhalb wenigstens eines der Spritzgußformelemente 4 und 5 liegt. Ein solches großes Bauelement 6 kann beispielsweise ein Displaymit Controller, eine mit einer Kontaktlosstruktur bestücktes Inlett, eine bestückte Leiterplatte zur Aufnahme eines Displays oder einer Tastatur, eine Sensorvorrichtung oder eine Batterieanordnung sein. Das oder die Bauelemente 6 können ferner Konstruktionen zur Bildung von Aussparungen 9 beinthalten, in die nach Abschluß des Spritzgießens Bauelemente eingesetzt werden.

Beim Einspritzen des Spritzgußmaterials zwischen die beiden Deckfolien 1, 1' über die Einspritzdüse 2 werden die Bauelemente 6 umspritzt. Als Spritzgußmaterial kann vorteilhaft ein zweikomponentiges Kunstharz ggf. mit weiteren Zusätzen verwendet werden, welches nach dem Einspritzen aushärtet ("Reaction Injection Molding"). Die Oberflächen der Formhälften 3,3' können, abgesehen von den beiden Spritzgußformelementen 4, 5, teilweise strukturiert sein, so daß sich die Strukturen in die Oberfläche der fertigen Karte übertragen, um auf diese Weise beispielsweise Vertiefungen zur Optimierung von Tastern und anderen Strukturen zu erstellen.

Aufgrund des Drucks, mit dem das Spritzgußmaterial in die Kavität der Spritzgießform eingespritzt wird, werden die Deckfolien 1,1' in die Negativreliefs der Spritzgußformelemente 4, 5 gepreßt. Dadurch prägt sich das Reliefnegativ als Reliefpositiv in die Deckfolien 1,1' ein. Dieser Vorgang kann durch geeignete Wahl des Einspritzdrucks, der Einspritztemperatur, der Oberflächentemperatur der Spritzgußformelemente 4, 5 (welche individuell beheizt ausgebildet sein können) und der Verweildauer des spritzgegossenen Teils in der Spritzgießform beeinflußt werden. Letztendlich ist es aber der Einspritzdruck, der das Abformen des Reliefnegativs in die Oberfläche des herzustellenden Datenträgers verursacht.

Figur 2 zeigt den fertig hergestellten Datenträger mit Indentprintnachbildung 7 und Hochprägenachbildung 8 schematisch im Querschnitt. Die in den Kartenkörper integrierten elektronischen Bauelemente 6 befinden sich dabei auf einem sogenannten Inlett, das eine Aussparung 9 beinhaltet, die beim Spritzgießprozeß nicht mit Spritzgießmaterial gefüllt wurde. In diese Aussparung 9 kann beispielsweise nachträglich ein besonders empfindliches Bauelement eingesetzt werden, das dem Spritzgießherstellungsprozeß nicht standhalten würde oder das aus technischen Gründen nachträglich eingesetzt werden muß, etwa ein Sensor, der an der Oberfläche liegen muß, oder ein elektronischer Chip, der nur außerhalb der Karte auf diese individualisiert werden kann.

## Patentansprüche

1. Verfahren zum Herstellen von spritzgegossenen kartenförmigen tragbaren Datenträgern, insbesondere Kreditkarten und anderen Ausweiskarten, mit Individualisierungsdaten, die durch Materialaussparungen und/ oder Materialerhebungen in die Oberfläche des Datenträgers eingebracht sind, umfassend die Schritte:
- Zurverfügungstellen einer Spritzgußform (3, 3') mit den Abmessungen des fertigen Datenträgers,
- Einsetzen mindestens eines austauschbaren Spritzgußformelements (4, 5) in die Spritzgußform derart, daß es einen Teil der formgebenden Spritzgußformoberfläche mit den durch die Materialaussparungen und/ oder Materialerhebungen in die Oberfläche des herzustellenden Datenträgers einzubringenden Individualisierungsdaten in Form von Buchstaben und/oder Zahlen als Reliefnegativ bildet,
- gegebenenfalls Einbringen etwaiger Bestandteile des herzustellenden Datenträgers in die Spritzgußform, die beim Spritzgießen mit Spritzgußmaterial verbunden werden sollen, und
- Einspritzen von Spritzgußmaterial mit hohem Druck derart, daß der Spritzgießdruck auf den durch das austauschbare Spritzgußformelement gebildeten formgebenden Teil der Spritzgußformoberfläche wirkt und **dadurch** ein kartenförmiger Datenträger mit den gewünschten Materialaussparungen und/ oder Materialerhebungen in der Datenträgeroberfläche entsteht.

2. Verfahren nach Anspruch 1, **dadurch gekennzeichnet, daß** das Spritzgußmaterial einseitig an eine Deckschicht (1) des herzustellenden Datenträgers oder zwischen zwei Deckschichten (1,1') des herzustellenden Datenträgers eingespritzt wird und sich das Reliefnegativ aufgrund des Einspritzdrucks in die eine Deckschicht (1) oder in die zwei Deckschichten (1,1') einprägt und darin ein entsprechendes Reliefpositiv (7, 8) erzeugt.

3. Verfahren nach Anspruch 1 oder 2, **dadurch gekennzeichnet, daß** der Datenträger mit den äußeren Abmessungen gemäß ISO 7810, insbesondere im ID-1 Format, hergestellt wird.

4. Verfahren nach Anspruch 3, **dadurch gekennzeichnet, daß** die Materialaussparungen im Bereich eines Unterschriftsstreifens und/ oder die Materialerhebungen in einem der in ISO 7811, Teil 3 definierten Bereiche für hochgeprägte Karten erzeugt werden.

5. Verfahren nach einem der Ansprüche 1 bis 4, **dadurch gekennzeichnet, daß** im Bereich des mindestens einen Spritzgußformelements ein oder mehrere elektronische Bauelemente des herzustellenden Datenträgers in die Spritzgußform eingebracht werden.

6. Vorrichtung zur Herstellung von individualisierten kartenförmigen tragbaren Datenträgern, insbesondere Kreditkarten und anderen Ausweiskarten, umfassend eine Spritzgußform (3,3') und eine Mehrzahl von unterschiedlichen, in die Spritzgußform einsetzbaren Spritzgußformelementen (4, 5), die gegeneinander austauschbar sind und im eingesetzten Zustand einen Teil der formgebenden Spritzgußformoberfläche bilden, wobei dieser Teil in die Oberfläche der herzustellenden Datenträger durch Materialaussparungen und/oder Materialerhebungen einzubringende Individualisierungsdaten als Reliefnegativ aufweist, wobei die Vorrichtung eingerichtet ist, Spritzgußmaterial mit Druck derart in die Spritzgußform einzubringen, daß der Spritzgießdruck auf den durch mindestens eines der austauschbaren Spritzgußformelemente gebildeten formgebenden Teil der Spritzgußformoberfläche wirkt.

7. Vorrichtung nach Anspruch 6, **dadurch gekennzeichnet, daß** die inneren Abmessungen der Spritzgußform den äußeren Abmessungen eines Datenträgers gemäß ISO 7810, insbesondere im ID-1 Format, entsprechen.

8. Vorrichtung nach Anspruch 7, **dadurch gekennzeichnet, daß** der durch mindestens eines der Spritzgußformelemente (4, 5) gebildete Teil der formgebenden Spritzgußformoberfläche für die Erzeugung der Materialaussparungen im Bereich des Unterschriftsstreifens des herzustellenden Datenträgers und/ oder zur Erzeugung der Materialerhebungen in einem gemäß ISO 7811, Teil 3 definierten Bereich für hochgeprägte Karten liegt.

9. Vorrichtung nach einem der Ansprüche 6 bis 8, **dadurch gekennzeichnet, daß** sie eingerichtet ist, im Bereich des durch mindestens eines der einsetzbaren Spritzgußformelemente gebildeten Teils der formgebenden Spritzgußformoberfläche ein oder mehrere elektronische Bauelemente in die Spritzgußform einzubringen.

10. Verwendung einer Vorrichtung nach einem der Ansprüche 7 bis 9 zur Erzeugung von kartenförmigen Datenträgern, insbesondere Kreditkarten und anderen Ausweiskarten, mit Individualisierungsdaten gemäß ISO 7811.

11. Kartenförmiger tragbarer Datenträger, insbesondere Kreditkarte oder andere Ausweiskarte, mit zwei planparallelen Hauptoberflächen, die Individualisierungsdaten in Form von Buchstaben und/ oder Zahlen aufweisen, welche als Materialerhebungen aus mindestens einer der beiden Hauptoberflächen herausragen, wobei mindestens eine Kernschicht des Datenträgers spritzgegossen ist, sich die spritzgegossene Kernschicht zumindest auch in den Bereich der Materialerhebungen erstreckt und die den Materialerhebungen gegenüberliegende Hauptoberfläche keine den Materialerhebungen entsprechenden Materialaussparungen aufweist.

12. Datenträger nach Anspruch 11, **dadurch gekennzeichnet, daß** mindestens eine der beiden Hauptoberflächen durch eine Kunststofffolie (1, 1') gebildet ist und die Materialerhebungen in der Kunststofffolie ausgebildet sind.

13. Datenträger nach Anspruch 11 oder 12, **dadurch gekennzeichnet daß** der Datenträger Abmessungen gemäß ISO 7810, insbesondere im ID-1 Format, aufweist.

14. Datenträger nach Anspruch 13, **dadurch gekennzeichnet, daß** die Materialerhebungen in einem der in ISO 7811, Teil 3 definierten Bereiche für hochgeprägte Karten liegen.

15. Datenträger nach einem der Ansprüche 11 bis 14, **dadurch gekennzeichnet, daß** im Bereich der Materialerhebungen eine oder mehrere elektronische Bauelemente mit Spritzgußmaterial der spritzgegossenen Kartenkernschicht umspritzt sind.
